# EUROPÄISCHE PATENTSCHRIFT

(11) **EP 0 655 817 B1**
(45) Veröffentlichungstag und Bekanntmachung des Hinweises auf die Patenterteilung: **14.05.1997**
(21) Anmeldenummer: 94117262.9
(22) Anmeldetag: 02.11.1994
(51) Int. Cl.: H02G 3/06, H02G 3/08

(54) **Schraubbare Einführungsvorrichtung für Muffen oder Gehäuse**
Screwing cable entry device for sleeves or housing
Dispositif à vissage pour entrée de câble dans un manchon ou un boîtier

(30) Priorität: 29.11.1993 DE 4340629
(43) Veröffentlichungstag der Anmeldung: 31.05.1995
(73) Patentinhaber: RXS Kabelgarnituren Gesellschaft mit beschränkter Haftung, D-58093 Hagen (DE)
(72) Erfinder: Winterhoff, Hans, Dipl.-Ing., D-58239 Schwerte (DE); Günther, Andreas, Dipl.-Ing., D-58710 Menden (DE)
(74) Vertreter: Fuchs, Franz-Josef, Dr.-Ing.

(56) Entgegenhaltungen:
- DE-A- 2 432 420
- DE-C- 3 737 346
- FR-A- 2 583 497
- GB-A- 2 040 603
- GB-A- 2 224 894

## Beschreibung

Die Erfindung betrifft eine schraubbare Einführungsvorrichtung an Einführungsöffnungen von Muffen oder Gehäusen mit einer perßbaren Ringdichtung, wobei eine Einführungshülse mit Außengewinde an der Einführungsöffnung der Muffe oder des Gehäuses fest und dicht angeordnet ist, eine Überwurfmutter mit Innengewinde auf die Einführungshülse aufschraubbar ist, wobei in der Überwurfmutter eine Preßhülse so angeordnet ist, daß zum Innengewinde der Überwurfmutter eine Ringnut gebildet ist, in welche die Einführungshülse beim Aufdrehen der Überwurfmutter eintaucht, eine längsgeteilte Ringdichtung mit einem dem einzuführenden Kabel grob angepaßten Innendurchmesser in der Einführungshülse bis zu einem ringförmigen Anschlag eingeschoben ist und die ringförmige Stirnfläche der Preßhülse gegen die Stirnseite der Ringdichtung mit Hilfe der Überwurfmutter preßbar ist.

Bei Schraubverbindungen zwischen Kabeln oder an Einführungsstellen für Kabel bei Gehäusen oder Muffen werden zur Abdichtung elastische, hülsenartige Dichtelemente verwendet, die in den Trennebenen durch den beim Aufschrauben der Schraubelemente entstehenden Druck dicht eingepreßt werden (DE-OS 23 09 649). Bei einer derartigen Vorrichtung wird zusätzlich unter dem Kabelmantel eine stabile Hülse eingeschoben, so daß der stetig anstehende Anpreßdruck nicht bis auf die im Inneren befindlichen Kabeladern wirken kann. Diese Maßnahme ist erforderlich, da bei einer solchen dauerelastischen Abdichtung die Einführungsstelle ständig unter Pressung gehalten ist. Bei empfindlichen Kabeln, wie zum Beispiel bei Lichtwellenleiter-Kabeln, treten bei einer solchen dauerhaften Verformung Schwierigkeiten auf, die bei Lichtwellenleitern zu einer Minderung der Übertragungsqualität führen.

Aus FR-A-2 583 497 ist eine schraubbare Einführungsvorrichtung für Einführungsöffnungen bei Muffen oder Gehäusen mit einer preßbaren Ringdichtung bekannt. Diese Vorrichtung kann jedoch nur auf ungeschnittene langgestreckte Gegenstände aufgebracht werden, da eine Längsteilung, d.h. eine Teilung in axialer Richtung der einzelnen Elemente nicht durchgeführt ist.

Aus GB-A-2 040 603 ist eine Dichtungseinführung für Gehäuse bekannt, bei der aushärtbare Dichtungen verwendet werden, die in gegenseitig verschraubbaren Einsätzen eingebracht werden.

Aus DE-A-37 37 346 ist weiterhin eine Vorrichtung zur abgedichteten Verlegung von Rohren, Leitungen durch Gerätewandungen bekannt. Hier wird für die Abdichtung ein Dichtkörper in zylindrische Hülsen eingepreßt, wobei dieser Dichtkörper eine Trennfuge aufweist, so daß er über den Gegenstand gebracht werden kann. Eine Längsteilung der Hülsen ist nicht vorgesehen, und damit kann diese Vorrichtung nicht über ungeschnittene langgestreckte Gegenstände aufgebracht werden.

Aufgabe der Erfindung ist nun, eine schraubbare Einführungsvorrichtung zum druckdichten Einführen von labilen Substraten oder Kabeln mit instabilem Kabelmantelaufbau zu schaffen, wobei nach dem Eintreten der erforderlichen Dichtungswirkung keine dauerhafte Druckbelastung bestehen bleiben soll. Die gestellte Aufgabe wird nun mit einer schraubbaren Einführungsvorrichtung der eingangs erläuterten Art dadurch gelöst, daß die Einführungshülse und/oder die Überwurfmutter und/oder die Preßhülse längsgeteilt sind, wobei die längsgeteilte Ringdichtung zwischen zwei ringförmigen, längsgeteilten Preßscheiben angeordnet ist.

Vorteile gegenüber dem Stand der Technik ergeben sich nun in erster Linie dadurch, daß die schraubbare Einführungsvorrichtung gemäß der Erfindung auch bei Kabeln mit instabilem Kabelaufbau oder anderen labilen Substraten eingesetzt werden kann, ohne daß eine dauerhafte mechanische Belastung des Kabels aufrecht erhalten werden muß. Für einen solchen Aufbau wird eine spezielle Dichtmasse verwendet, die in die Dichtbereiche eingebracht und durch entsprechende Preßvorrichtungen verformt wird, bis die nötige Abdichtung erfolgt ist. Dabei wird durch die Preßmittel die Dichtungsmasse zu Anfang unter Druck gesetzt und auf die zu dichtenden Teile haftend aufgepreßt, wobei dann der Druck allmählich nachläßt, so daß das eingeführte Substrat nicht mehr unter Dauerdruck steht und dadurch beschädigt wird. Die Dichtmasse ist als Ringdichtung ausgeführt und besteht im Grundmaterial aus Butylmassen, die in geeigneter Weise modifiziert sind. Die Dichtungswirkung beruht im wesentlichen auf der Haftwirkung der Dichtmasse zu den Oberflächen der abzudichtenden Elemente, so daß nach der Verformung bzw. Anformung kein Dauerdruck mehr nötig ist.

Als Dichtmassen kommen zum Beispiel in Frage:
- dauerplastische Dichtmasse
- plastische und elastische Dichtmasse
- anfangs plastische, auf Zeit aushärtende Dichtmassen
- gelartige Dichtmasse
- gelartige, aushärtbare Dichtmassen

Für die Form der Dichtmasse können verschiedene Ausgestaltungen gewählt werden, wobei diese vorzugsweise als komplette Formteile gestaltet sind, doch ist auch möglich, die Dichtung in Form eines Wickelbandes auf dem einzuführenden Substrat herzustellen. Im übrigen sind folgende führungsbeispiele besonders zweckmäßig:
- ringförmiges Formteil
- Formteil mit Stabilisatoren
- Formteil mit Stützelementen
- Formteil mit Stützelementen und Zugabfangung am Kabelmantel
- geteiltes Formteil
- geteiltes Formteil mit gegenseitiger Verbindung, zum Beispiel mit Hilfe eines Scharniers
- geteiltes Formteil mit Fügeelementen
- geteiltes Formteil mit stirnseitigen Gleitelementen als Anlage für Druckelemente
- Vergußmasse mit stirnseitigen Dichtringen

Die Einführungsvorrichtung gemäß der Erfindung kann sowohl an geschnittenen wie auch an ungeschnittenen Kabeln bzw. Substraten Verwendung finden. Bei ungeschnittenen Elementen werden teilbare Verschraubungen eingesetzt. Bei defekten Verschraubungselementen können zu Reparaturzwecken ebenfalls geteilte Verschraubungselemente verwendet werden. Diese geteilten Verschraubungselemente können zum Beispiel auch entsprechende Fügeelemente aufweisen, durch die die einzelnen Teile zusammengehalten werden können. Das Zusammenfügen kann mit Fügeelementen in Längsrichtung wie auch in axialer Richtung vorgenommen werden, wobei die Fügetechnik jeweils entsprechend zu gestalten ist. Vorteilhaft ist dabei, wenn die einzelnen Fügeteile Führungen oder Sicherungen gegen Auseinanderfallen aufweisen. Dadurch wird dann die Montage wesentlich erleichtert, da die Einzelteile gegeneinander fixiert sind. Für solche Führungen kommen z.B. in Frage:
- Nut- und Federsysteme, zum Beispiel in Schwalbenschwanzform
- Stifte und korrespondierende Bohrungen
- Prismenführung
- Flachführung mit Umgriffleiste

Die Erfindung wird nun anhand von neunzehn Figuren näher erläutert.
- Figur 1: zeigt eine erste, komplett montierte Ausführungsform der Einführungsvorrichtung.
- Figur 2: zeigt die Einführungshülse.
- Figur 3: zeigt die Überwurfmutter mit Preßhülse.
- Figur 4: zeigt eine erste Ringdichtung.
- Figur 5: zeigt eine zweite Ringdichtung.
- Figur 6: zeigt eine zweite, komplett montierte Ausführungsform der Einführungsvorrichtung.
- Figur 7: zeigt die geteilte Form der Preßscheiben bzw. Ringdichtung mit Filmscharnier.
- Figur 8: zeigt die geteilte Form der Preßscheiben bzw. Ringdichtung mit Fügetechnik.
- Figuren 9 bis 13: zeigen Ringdichtungen mit eingelagerten Stabilisatoren.
- Figur 14: zeigt eine geteilte Preßhülse.
- Figur 15: zeigt eine geteilte Überwurfmutter.
- Figur 16: zeigt eine längsgeteilte Einführungsvorrichtung mit einer ersten Fügetechnik.
- Figur 17: zeigt eine längsgeteilte Einführungsvorrichtung mit einer zweiten Fügetechnik.
- Figur 18: zeigt eine geteilte Einführungshülse.
- Figur 19: zeigt eine Fügetechnik für Einführungshülsen.

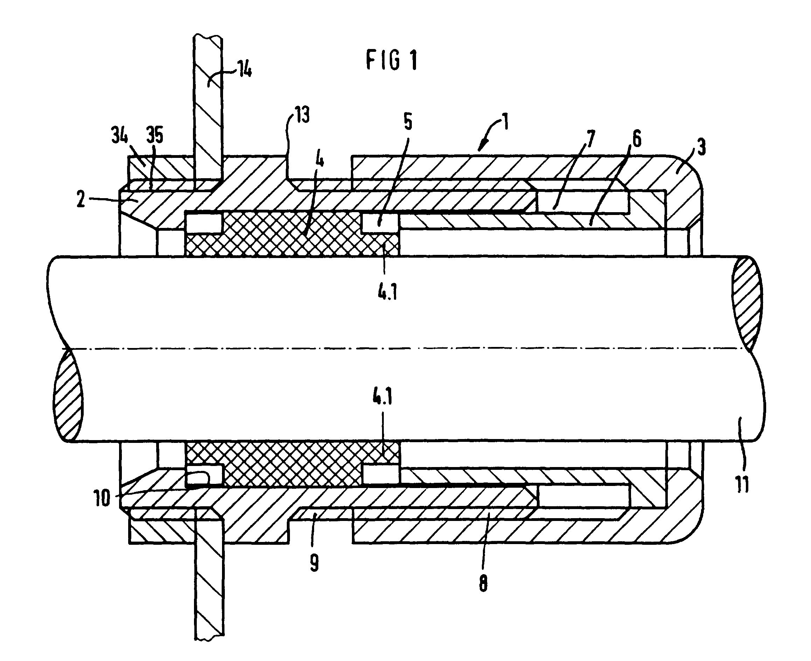

Figur 1 erläutert eine in einer Einführungsöffnung eines Gehäuses 14 oder einer Muffe montierte schraubbare Einführungsvorrichtung 1 gemäß der Erfindung. Das Grundelement, die Einführungshülse 2 ist fest und dicht in der Einführungsöffnung des Gehäuses 14 eingesetzt, wobei die Einführungshülse 2 auf der Anliegeseite mit einem Sechskant 13e versehen ist und mit einer Mutter 34 auf dem Außengewinde 35 gegen die Gehäusewandung 14 verschraubt wird. Die Einführungshülse 2 ist auf der Anlagefläche zum Gehäuse 14 mit speziellen Dichtlippen ausgeführt. Das freie nach auswärts gerichtete Ende der Einführungshülse 2 trägt ein Außengewinde 9, auf welches eine Überwurfmutter 3 aufschraubbar ist. In dieser Überwurfmutter 3 mit Innengewinde 8 ist eine Preßhülse 6 so eingeführt, daß zwischen dem Innengewinde 8 und der Preßhülse 6 eine Nut 7 gebildet ist, in die das freie Ende der Einführungshülse 2 beim Aufdrehen der Überwurfmutter 3 eintaucht. Im Inneren der Einführungshülse 2 wird zur Abdichtung gegen das eingeführte Kabel 11 eine Ringdichtung 4 eingeführt, deren Innendurchmesser etwa dem Durchmesser des eingeführten Kabels 11 entspricht. Am inneren Ende stützt sich die Ringdichtung 4 mit einer stirnseitigen, ringförmigen Preßscheibe 5 an einem inneren Anschlag 10 der Einführungshülse 2 ab. Beim Eindrehen der Überwurfmutter 3 wird nun die Preßhülse 6 gegen den zweiten Preßring 5 der Ringdichtung 4 gepreßt, wobei die Ringdichtung 4 nun so verpreßt wird, daß sich die Dichtungsmasse der Ringdichtung 4 an das Kabel 11 und die innere Wandung der Einführungshülse 2 haftend angeformt wird. Nach dieser Anformung der Dichtungsmasse kann die Pressung eingestellt werden; denn die weitere Dichtung erfolgt durch die Haftung der Dichtmasse an den kontaktierten Flächen. Es erfolgt allmählich ein Druckausgleich, so daß das Kabel 11 schließlich nicht mehr druckbelastet ist.

Der Druckausgleich der Dichtmasse erfolgt dabei in Längsrichtung entlang der Kabelmanteloberfläche in den Randbereichen 4.1 der Dichtmasse. Die stirnseitigen Preßscheiben 5 bewirken eine gleichmäßige Pressung der Dichtmasse in der Anpreßphase.

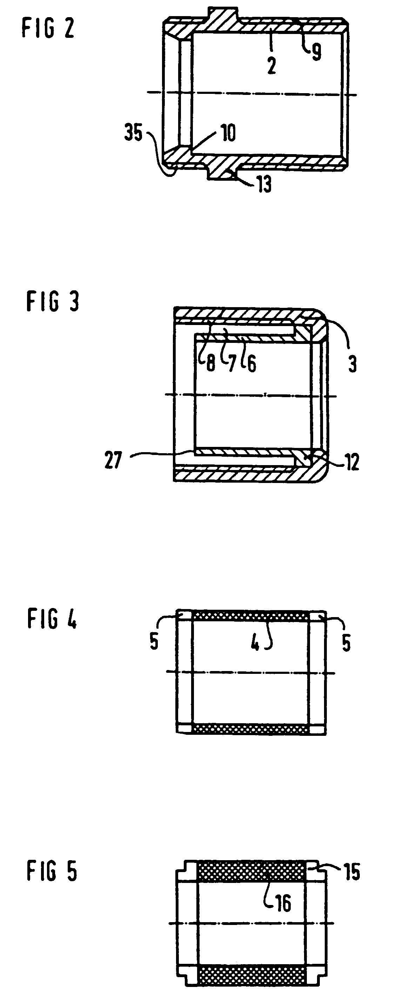

Die Figur 2 verdeutlicht die Ausbildung der Einführungshülse 2 in einer Schnittdarstellung, wobei ein Sechskant 13 am äußeren Umfang, der Anschlag 10 für die Ringdichtung und das Außengewinde 9 und das Außengewinde 35 für das Aufschrauben der Befestigungsmutter dargestellt sind.

In Figur 3 wird das Zusammensetzen der Überwurfmutter 3 und der inneren Preßhülse 6 gezeigt, wobei die Ringnut 5 deutlich wird, in die beim Zusammensetzen der gesamten Einführungsvorrichtung die Einführungshülse 2 eintaucht. Das Innengewinde 8 greift dabei in das Außengewinde 9 der in Figur 2 gezeigten Einführungshülse 2 ein. Die ringförmige Stirnfläche 27 der Preßhülse 6 dient als Anschlag für die Ringdichtung bzw. dessen Preßscheibe 5 bzw. 15.

Figur 4 verdeutlicht eine einfache Ringdichtung 4 gemäß der Erfindung, die im mittleren Bereich aus der oben bereits beschriebenen Dichtmasse besteht und die an beiden Stirnseiten mit ringförmigen Preßscheiben 5 begrenzt wird.

Figur 5 zeigt eine weitere Ringdichtung 16, die zu beiden Stirnseiten mit abgesetzten ringförmigen Preßscheiben 15 versehen sind. Durch diese Absetzung der Preßscheiben 15 an den äußeren Stirnseiten ist innerhalb der Einführungshülse 2 und für die einzuschraubende Preßhülse 6 eine bessere Führung und Zentrierung der Ringdichtung gegeben. Im übrigen gleichen sich die sonstigen Verhältnisse.

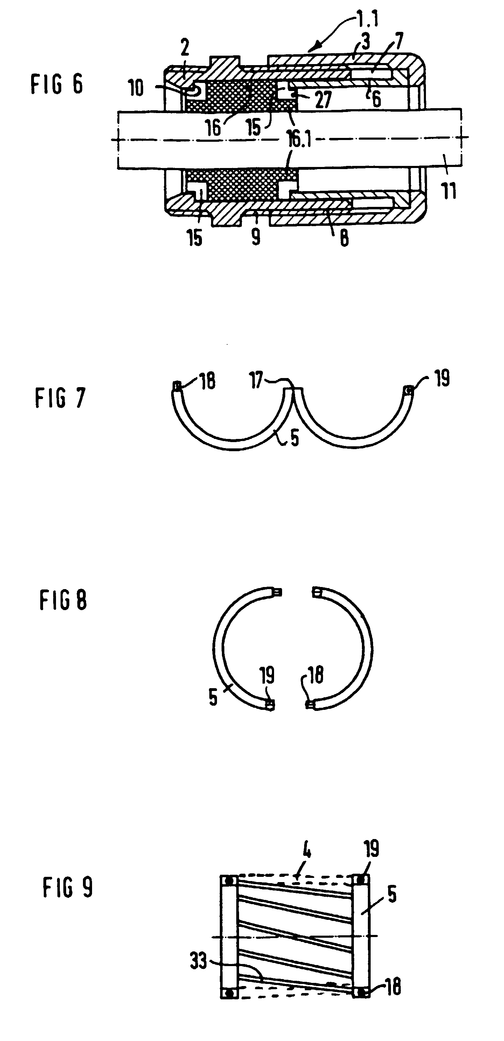

Die Figur 6 zeigt ein Ausführungsbeispiel einer Einführungsvorrichtung 1.1 gemäß der Erfindung mit einer Ringdichtung 16 nach Figur 5. Hier wird besonders deutlich, daß durch die Absetzung der Stirnseiten der Preßscheiben 15 eine gute Führung in der gesamten Anordnung erreicht ist, da sich dadurch eine zentrische Ausrichtung beim Zusammenbau erreichen läßt; denn in die abgesetzten Bereiche der Preßscheiben 15 greifen die Ansätze 10 der Einführungshülse 2 bzw. die Stirnfläche 27 der Preßhülse 6 ein. Im übrigen gleichen die Verhältnisse denen des Ausführungsbeispiels nach Figur 1.

Figur 7 zeigt, daß die Preßscheiben 5 und auch die Ringdichtung insgesamt längsgeteilt ausgeführt werden können, so daß auch ein Einsatz an ungeschnittenen Substraten bzw. Kabeln möglich ist. Für eine Erleichterung bei der Montage sorgt in diesem Fall ein Filmscharnier 17, über das die Halbteile auseinander bzw. zusammengeklappt werden können. Die offene Seite wird dann durch entsprechende Füge- oder Rastelemente nach dem Umlegen zusammengehalten. In diesem Fall sind hier Stifte 18 und korrespondierende Bohrungen 19 vorgesehen.

Figur 8 verdeutlicht, daß die Ringdichtung mit Preßscheiben 5 auch völlig geteilt sein kann, so daß für die nötige Fixierung auf beiden Seiten entsprechende Füge- oder Rastelemente (18, 19) eingebracht sind.

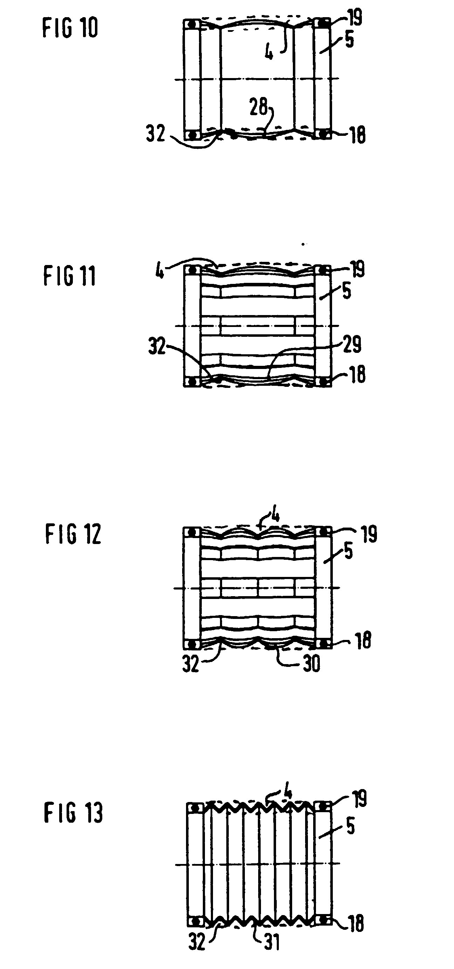

Aus Figur 9 geht hervor, daß die Stützelemente 33 mit den Preßscheiben 5 als ein Teil gespritzt sind und von der Dichtmasse 4, die hier nur angedeutet ist, umgeben werden. Ebenso in den folgenden Figuren 10 - 13 mit den Stützelementen 28-32. Diese Stützelemente bzw. Stabilisatoren 32, wie auch bei den folgenden Figuren 10 bis 13, müssen in axialer Richtung eine Verformung der Dichtmasse 4 zulassen, bilden jedoch andererseits eine Verstärkung der Ringdichtung insgesamt und können bei entsprechender Gestaltung sogar als Abfangelemente für den Kabelmantel dienen. Durch das Zusammenpressen der Ringdichtung während der Montage werden die Stützelemente 32 (wie auch 28, 29, 30, 31) zusammengepreßt und umgreifen dadurch den Kabelmantel enger, so daß über diese Stützelemente auch ein besserer mechanischer Kontakt zum Kabelmantel erreichbar ist. Diese Stützelemente bzw. Stabilisatoren können somit also auch als Zugabfangelemente für am Kabelmantel wirkende Zugkräfte dienen. Der Übersichtlichkeit wegen sind in dieser wie in den folgenden Figuren geteilte Ringdichtungen dargestellt, bei denen zum Beispiel Stifte 18 und Bohrungen 19 als Rastelemente vorgesehen sind. Die Stützelemente, Stabilisatoren bzw. Abfangelemente sind im wesentlichen stabile Bänder oder drahtförmige Elemente, die sich von einer Preßscheibe 5 oder 15 zur anderen Preßscheibe 5 oder 15 erstrecken.

Die Figur 10 zeigt eine Ringdichtung aus Dichtmasse 4 und eingelegten Stützelementen bzw. Stabilisatoren 28, die in Längsrichtung bogenförmig geführt sind, wobei sie an mehreren Stellen als Sollknickstellen 32 eingeknickt sind. Beim Verpressen der Ringdichtung in axialer Richtung knicken dann diese Stützelemente 28 nach innen ein und wirken dann als Abfangelemente auf den Kabelmantel ein. Hier sind drahtförmige Stützelemente 28 verwendet.

Die Figur 11 zeigt die gleiche Art der Ausführung wie die Figur 10, doch sind hier bandförmige Stützelemente 29 verwendet.

Figur 12 verdeutlicht eine Ausführung, bei der die Stützelemente 30 mehrere hintereinander liegende Sollknickstellen 32 aufweisen.

Figur 13 zeigt, daß als Stützelement auch ein Wellrohr 31 eingesetzt werden kann, das in die Dichtmasse 4 eingebettet ist. Beim axialen Verpressen der Ringdichtung erfolgt auch hier eine Verengung des Innendurchmessers, so daß auch hier ähnliche Verhältnisse gegeben sind wie sie vorher bereits beschrieben sind.

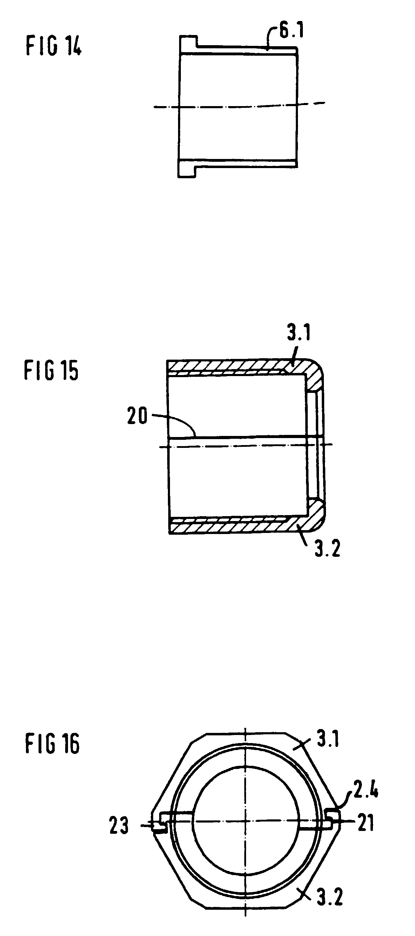

Figur 14 zeigt eine geteilte Preßhülse 6.1, die für den Einsatz an ungeschnittenen Substraten oder Kabeln geeignet ist.

Figur 15 zeigt eine in zwei Hälften 3.1-3.2 geteilte Überwurfmutter, wobei die Längsteilung 20 erkennbar ist.

Figur 16 verdeutlicht die geteilte Ausführung mit den beiden Hälften 3.1 und 3.2 der Überwurfmutter. Hier sind entlang der Längsteilung 20 Fügeprofile 21-22 ausgebildet, mit denen eine radiale Fügung der Halbteile möglich ist. Durch die nutenförmgie Ausbildung der längs verlaufenden Randbereiche werden nach dem radialen Zusammenfügen die Hälften gegeneinander fixiert.

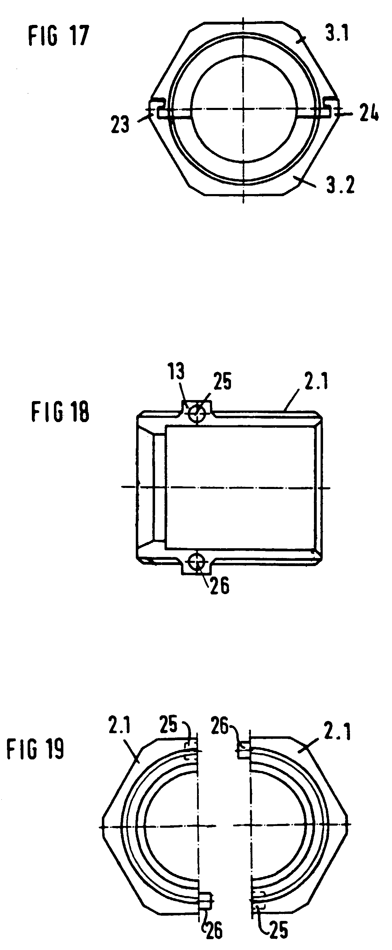

Die Figur 17 verdeutlicht eine Ausbildung der längs verlaufenden Teilungsbereiche mit Nuten und Randprofilen 23 und 24, mit denen nur eine Zusammenfügung in Längsrichtung erfolgen kann. Diese Nuten können rechteckförmigen oder auch zum Beispiel schwalbenschwanzartigen Querschnitt aufweisen. Ebenso können auch Prismenführungen oder Flachfügungen mit Umgriffleisten angeformt werden. Allen Ausführungen ist jedoch gemeinsam, daß sie eine Sicherung gegen Auseinanderfallen bieten.

Figur 18 zeigt eine halbierte Einführungshülse 2.1, die in den Bereichen des Wulstes 13 geeignete Fügebzw. Rastelemente 25 und 26 aufweist.

Figur 19 verdeutlicht die Ausführung nach Figur 18 und zeigt, daß als Fügeelemente Stifte 26 und Bohrungen 25 angewendet sind.

Im übrigen wird darauf verwiesen, daß die aufgeführten Möglichkeiten der Fügetechniken in beliebiger Form abgewandelt oder variiert werden können. Wichtig ist dabei lediglich, daß nach der Montage eine Sicherung gegen unbeabsichtigtes Auseinanderfallen gegeben ist.

## Patentansprüche

1. Schraubbare Einführungsvorrichtung an Einführungsöffnungen von Muffen oder Gehäusen mit einer preßbaren Ringdichtung, wobei eine Einführungshülse (2) mit Außengewinde (9) an der Einführungsöffnung der Muffe oder des Gehäuses (14) fest und dicht angeordnet ist, eine Überwurfmutter (3) mit Innengewinde (8) auf die Einführungshülse (2) aufschraubbar ist, wobei in der Überwurfmutter (3) eine Preßhülse (6) so angeordnet ist, daß zum Innengewinde (8) der Überwurfmutter (3) eine Ringnut (7) gebildet ist, in welche die Einführungshülse (2) beim Aufdrehen der Überwurfmutter (3) eintaucht, eine längsgeteilte Ringdichtung (4, 16) mit einem dem einzuführenden Kabel (11) grob angepaßten Innendurchmesser in der Einführungshülse (2) bis zu einem ringförmigen Anschlag (10) eingeschoben ist und die ringförmige Stirnfläche (27) der Preßhülse (6) gegen die Stirnseite der Ringdichtung (4, 16) mit Hilfe der Überwurfmutter (3) preßbar ist,
**dadurch gekennzeichnet**,
daß die Einführungshülse (2.1) und/oder die Überwurfmutter (3.1) und/oder die Preßhülse (6.1) längsgeteilt und nach der Montage ergänzend aneinander fixierbar sind, wobei die längsgeteilte Ringdichtung (4, 16) zwischen zwei ringförmigen, längsgeteilten Preßscheiben (5, 15) angeordnet ist.

2. Schraubbare Einführungsvorrichtung nach Anspruch 1,
**dadurch gekennzeichnet**,
daß die geteilten Elemente (2.1, 3.1, 6.1) mit gegenseitig ineinander greifenden Fügeprofilen (20-21, 23-24, 25-26) versehen sind.

3. Schraubbare Einführungsvorrichtung nach Anspruch 2,
**dadurch gekennzeichnet**,
daß die Fügerichtung radial ist.

4. Schraubbare Einführungsvorrichtung nach Anspruch 2,
**dadurch gekennzeichnet**,
daß die Fügerichtung längs verläuft.

5. Schraubbare Einführungsvorrichtung nach einem der Ansprüche 2 bis 4,
**dadurch gekennzeichnet**,
daß eine Sicherung, vorzugsweise Verriegelung, gegen Auseinanderfallen der geteilten Elemente angeordnet ist.

6. Schraubbare Einführungsvorrichtung nach Anspruch 2,
**dadurch gekennzeichnet**,
daß das Fügeprofil in Schwalbenschwanzform ausgebildet ist.

7. Schraubbare Einführungsvorrichtung nach Anspruch 2,
**dadurch gekennzeichnet**,
daß das Fügeprofil aus Stiften (26) und Bohrungen (25) besteht.

8. Schraubbare Einführungsvorrichtung nach Anspruch 2,
**dadurch gekennzeichnet**,
daß das Fügeprofil als Prismenführung ausgebildet ist.

9. Schraubbare Einführungsvorrichtung nach Anspruch 2,
**dadurch gekennzeichnet**,
daß das Fügeprofil als Flachführung mit Umgriffleiste ausgebildet ist.

10. Schraubbare Einführungsvorrichtung nach einem der vorhergehenden Ansprüche,
**dadurch gekennzeichnet**,
daß die Ringdichtung (4, 16) aus dauerplastischer Dichtungsmasse besteht.

11. Schraubbare Einführungsvorrichtung nach einem der Ansprüche 1 bis 9,
**dadurch gekennzeichnet**,
daß die Ringdichtung (4, 16) aus plastisch-elastischer Dichtungsmasse besteht.

12. Schraubbare Einführungsvorrichtung nach einem der Ansprüche 1 bis 9,
**dadurch gekennzeichnet**,
daß die Ringdichtung (4, 16) aus einer zur Montagezeit plastischen und mit der Zeit aushärtbaren Dichtungsmasse besteht.

13. Schraubbare Einführungsvorrichtung nach einem der Ansprüche 1 bis 9,
**dadurch gekennzeichnet**,
daß die Ringdichtung (4, 16) aus einer gelartigen Dichtungsmasse besteht.

14. Schraubbare Einführungsvorrichtung nach einem der Ansprüche 1 bis 9,
**dadurch gekennzeichnet**,
daß die Ringdichtung (4, 16) aus einer zur Montagezeit gelartigen und mit der Zeit aushärtbaren Dichtungsmasse besteht.

15. Schraubbare Einführungsvorrichtung nach einem der Ansprüche 1 bis 9,
**dadurch gekennzeichnet**,
daß die Ringdichtung (4, 16) aus einer Vergußmasse mit seitlichen Dichtringen besteht.

16. Schraubbare Einführungsvorrichtung nach einem der Ansprüche 1 bis 9,
**dadurch gekennzeichnet**,
daß die Ringdichtung (4, 16) als fortlaufendes Band ausgebildet ist und auf das abzudichtende Kabel aufgewickelt ist.

17. Schraubbare Einführungsvorrichtung nach einem der Ansprüche 1 bis 9,
**dadurch gekennzeichnet**,
daß die Ringdichtung (4, 16) ein selbständiges Formteil ist.

18. Schraubbare Einführungsvorrichtung nach einem der Ansprüche 1 bis 18,
**dadurch gekennzeichnet**,
daß die Ringdichtung (4, 16) mechanische Stützelemente oder Stabilisatoren (28, 29, 30, 31, 32) enthält.

19. Schraubbare Einführungsvorrichtung nach einem der vorhergehenden Ansprüche,
**dadurch gekennzeichnet**,
daß die Ringdichtung (4, 16) mit einer Zugabfangvorrichtung versehen ist.

20. Schraubbare Einführungsvorrichtung nach Anspruch 1,
**dadurch gekennzeichnet**,
daß die Preßscheiben (5, 15) mit Hilfe eines Scharniers (17), vorzugsweise eines Filmscharniers, miteinander klappbar verbunden sind.

21. Schraubbare Einführungsvorrichtung nach Anspruch 19,
**dadurch gekennzeichnet**,
daß die Zugabfangung im Bereich der Ringdichtung (4, 16) angeordnet ist und vorzugsweise wie die Stabilisatoren (28, 29, 30, 31, 32) als Abfangelemente ausgebildet ist, die bei wirkender Pressung der Ringdichtung (4, 16) in Längsrichtung radial einwärts auf die eingeführten Kabelmäntel (11) preßbar sind.

22. Schraubbare Einführungsvorrichtung nach Anspruch 21,
**dadurch gekennzeichnet**,
daß die Zugabfangung längsgerichtete, mechanisch stabile Bänder, vorzugsweise wie die Stabilisatoren (29, 30, 31, 33), aufweist, wobei diese umlaufende, scharfkantige Sollknickstellen (32) aufweisen.

## Claims

1. Screw-fitting entry device at entry openings of sleeves or housings having a compressible annular seal, an entry sleeve (2) with an external thread (9) being firmly and tightly arranged at the entry opening of the sleeve or of the housing (14), a union nut (3) with an internal thread (8) being able to be screwed onto the entry sleeve (2), a compression sleeve (6) being arranged in the union nut (3) in such a manner that an annular groove (7) is formed in relation to the internal thread (8) of the union nut (3), into which groove the entry sleeve (2) enters when the union nut (3) is tightened, a longitudinally split annular seal (4, 16) having an internal diameter coarsely matched to the cable (11) to be inserted being pushed in the entry sleeve (2) as far as an annular stop (10), and the annular end face (27) of the compression sleeve (6) being able to be pressed against the end of the annular seal (4, 16) with the aid of the union nut (3), characterized in that the entry sleeve (2.1) and/or the union nut (3.1) and/or the compression sleeve (6.1) are longitudinally split and, following assembly, can be fixed to one another in a complementary manner, the longitudinally split annular seal (4, 16) being arranged between two annular, longitudinally split compression washers (5, 15).

2. Screw-fitting entry device according to Claim 1, characterized in that the split elements (2.1, 3.1, 6.1) are provided with mutually inter-engaging joint profiles (20-21, 23-24, 25-26).

3. Screw-fitting entry device according to Claim 2, characterized in that the joint direction is radial.

4. Screw-fitting entry device according to Claim 2, characterized in that the joint direction runs longitudinally.

5. Screw-fitting entry device according to one of Claims 2 to 4, characterized in that a securing means, preferably a locking means, is arranged to prevent the split elements falling apart.

6. Screw-fitting entry device according to Claim 2, characterized in that the joint profile is designed in a dovetail shape.

7. Screw-fitting entry device according to Claim 2, characterized in that the joint profile is composed of pins (26) and holes (25).

8. Screw-fitting entry device according to Claim 2, characterized in that the joint profile is designed as a prismatic guide.

9. Screw-fitting entry device according to Claim 2, characterized in that the joint profile is designed as a flat guide with an encompassing strip.

10. Screw-fitting entry device according to one of the preceding claims, characterized in that the annular seal (4, 16) consists of permanently plastic sealing compound.

11. Screw-fitting entry device according to one of Claims 1 to 9, characterized in that the annular seal (4, 16) consists of plastic-elastic sealing compound.

12. Screw-fitting entry device according to one of Claims 1 to 9, characterized in that the annular seal (4, 16) consists of a sealing compound which is plastic at the time of assembly and hardened over time.

13. Screw-fitting entry device according to one of Claims 1 to 9, characterized in that the annular seal (4, 16) consists of a gel-like sealing compound.

14. Screw-fitting entry device according to one of Claims 1 to 9, characterized in that the annular seal (4, 16) consists of a sealing compound which is gel-like at the time of assembly and hardens over time.

15. Screw-fitting entry device according to one of Claims 1 to 9, characterized in that the annular seal (4, 16) consists of a casting compound with lateral sealing rings.

16. Screw-fitting entry device according to one of Claims 1 to 9, characterized in that the annular seal (4, 16) is designed as a continuous band and is wound onto the cable to be sealed.

17. Screw-fitting entry device according to one of Claims 1 to 9, characterized in that the annular seal (4, 16) is an independent moulding.

18. Screw-fitting entry device according to one of Claims 1 to 17, characterized in that the annular seal (4, 16) contains mechanical supporting elements or stabilizers (28, 29, 30, 31, 32).

19. Screw-fitting entry device according to one of the preceding claims, characterized in that the annular seal (4, 16) is provided with a tension intercepting device.

20. Screw-fitting entry device according to Claim 1, characterized in that the compression washers (5, 15) are connected with the aid of a hinge (17), preferably a film hinge, so that they can be folded in relation to each other.

21. Screw-fitting entry device according to Claim 19, characterized in that the tension interceptor is arranged in the region of the annular seal (4, 16) and is preferably designed, like the stabilizers (28, 29, 30, 31, 32), as interception elements which, under the action of pressure of the annular seal (4, 16) in the longitudinal direction, can be pressed radially inwards onto the inserted cable sheaths (11).

22. Screw-fitting entry device according to Claim 21, characterized in that the tension interceptor has longitudinally directed, mechanically stable bands, preferably like the stabilizers (29, 30, 31, 33), said bands having circumferential, sharp-edged buckling points (32).

## Revendications

1. Dispositif d'introduction pouvant être vissé à des ouvertures d'introduction de manchons ou de boîtiers, comportant un dispositif d'étanchéité pouvant être comprimé, une douille (2) d'introduction filetée (9) étant montée de manière fixe et étanche à l'ouverture d'introduction du manchon ou du boîtier (14), un écrou-raccord (3) taraudé (8) pouvant être vissé à la douille (2) d'introduction, une douille (6) de pression étant montée dans l'écrou-raccord (3) de manière que se forme par rapport au taraudage (8) de l'écrou-raccord (3) une rainure (7) annulaire, dans laquelle la douille (2) d'introduction s'enfonce lorsque l'on dévisse l'écrou-raccord (3), un dispositif (4, 16) d'étanchéité annulaire fendu longitudinalement, ayant un diamètre intérieur adapté grossièrement au câble (11) à introduire étant repoussé dans la douille (2) d'introduction jusqu'à une butée (10) annulaire et la face (27) frontale annulaire de la douille (6) de pression pouvant être comprimée sur la face frontale du dispositif (4, 16) d'étanchéité annulaire à l'aide de l'écrou-raccord (3),
caractérisé en que
la douille (2.1) d'introduction et/ou l'écrou-raccord (3.1) et/ou la douille (6.1) de pression sont fendues longitudinalement et peuvent, après le montage, être fixés les uns aux autres en se complétant, le dispositif (4, 16) d'étanchéité fendu longitudinalement étant monté entre deux rondelles (5, 15) de pression annulaires fendues longitudinalement.

2. Dispositif d'introduction pouvant être vissé suivant la revendication 1, caractérisé en ce que les éléments (2.1, 3.1, 6.1) fendus sont munis de parties (20-21, 23-24, 25-26) profilés de joint qui s'interpénètrent mutuellement.

3. Dispositif d'introduction pouvant être vissé suivant la revendication 2, caractérisé en ce que la direction de joint est radiale.

4. Dispositif d'introduction pouvant être vissé suivant la revendication 2. caractérisé en ce que la direction de joint s'étend longitudinalement.

5. Dispositif d'introduction pouvant être vissé suivant l'une des revendication 2 à 4, caractérisé en ce qu'il est prévu un blocage, de préférence un verrouillage, qui empêche les éléments fendus de tomber en morceaux.

6. Dispositif d'introduction pouvant être vissé suivant la revendication 2, caractérisé en ce que le profil de joint est réalisé en forme de queue d'aronde.

7. Dispositif d'introduction pouvant être vissé suivant la revendication 2, caractérisé en ce que le profil de joint est constitué de broches (26) et de trous (25).

8. Dispositif d'introduction pouvant être vissé suivant la revendication 2, caractérisé en ce que le profil de joint est réalisé en glissière prismatique.

9. Dispositif d'introduction pouvant être vissé suivant la revendication 2, caractérisé en ce que le profil de joint est réalisé en glissière plane à baguette de serrage.

10. Dispositif d'introduction pouvant être vissé suivant l'une des revendications précédentes, caractérisé en ce que le dispositif (4, 16) d'étanchéité annulaire est constitué d'un agent d'étanchéité à plasticité permanente.

11. Dispositif d'introduction pouvant être vissé suivant l'une des revendications 1 à 9, caractérisé en ce que le dispositif (4, 16) d'étanchéité annulaire est constitué d'un agent d'étanchéité plastique-élastique.

12. Dispositif d'introduction pouvant être vissé suivant l'une des revendications 1 à 9, caractérisé en ce que le dispositif (4, 16) d'étanchéité annulaire est constitué d'un agent d'étanchéité plastique au moment du montage et durcissable avec le temps.

13. Dispositif d'introduction pouvant être vissé suivant l'une des revendications 1 à 9, caractérisé en ce que le dispositif (4, 16) d'étanchéité annulaire est constitué d'un agent d'étanchéité du genre d'un gel.

14. Dispositif d'introduction pouvant être vissé suivant l'une des revendications 1 à 9, caractérisé en ce que le dispositif (4, 16) d'étanchéité annulaire est constitué d'un agent d'étanchéité du genre d'un gel au moment du montage et durcissable avec le temps.

15. Dispositif d'introduction pouvant être vissé suivant l'une des revendications 1 à 9, caractérisé en ce que le dispositif (4, 16) d'étanchéité annulaire est constitué d'une masse de scellement à bagues d'étanchéité latérales.

16. Dispositif d'introduction pouvant être vissé suivant l'une des revendications 1 à 9, caractérisé en ce que le dispositif (4, 16) d'étanchéité annulaire est réalisé en bande continue et enroulé sur le câble à rendre étanche.

17. Dispositif d'introduction pouvant être vissé suivant l'une des revendications 1 à 9, caractérisé en ce que le dispositif (4, 16) d'étanchéité annulaire est une pièce moulée indépendante.

18. Dispositif d'introduction pouvant être vissé suivant l'une des revendications 1 à 17, caractérisé en ce que le dispositif (4, 16) d'étanchéité annulaire contient des éléments d'appui mécaniques ou des stabilisateurs (28, 29, 30, 31, 32).

19. Dispositif d'introduction pouvant être vissé suivant l'une des revendications précédentes, caractérisé en ce que le dispositif (4, 16) d'étanchéité annulaire est muni d'un dispositif d'interception de traction.

20. Dispositif d'introduction pouvant être vissé suivant la revendication 1, caractérisé en ce que les rondelles (5, 25) de pression sont reliées à l'aide d'une charnière (17), de préférence d'une charnière pelliculaire, de manière à pouvoir être rabattues l'une sur l'autre.

21. Dispositif d'introduction pouvant être vissé suivant la revendication 19, caractérisé en ce que le dispositif d'interception de traction est monté dans la zone du dispositif (4, 16) d'étanchéité annulaire et réalisé de préférence comme les stabilisateurs (28, 29, 30, 31, 32) en éléments d'interception qui, lorsque la compression du dispositif (4, 16) d'étanchéité annulaire agit dans la direction longitudinale, peuvent être pressés radialement vers l'intérieur vers l'enveloppe (11) du câble.

22. Dispositif d'introduction pouvant être vissé suivant la revendication 21, caractérisé en ce que le dispositif d'interception de traction comporte des bandes mécaniquement solides, de préférence comme les stabilisateurs (28, 29, 30, 31, 32), ces bandes comportant des points (32) de flexion de consigne anguleux sur tout le pourtour.
